Europäisches Patentamt

European Patent Office

Office européen des brevets

(11) Publication number: **0 438 745 A1**

# EUROPEAN PATENT APPLICATION

(21) Application number: **90124918.5**

(22) Date of filing: **20.12.90**

(51) Int. Cl.⁵: **F16C 1/26, B29C 53/14, B29C 47/06**

(30) Priority: **05.01.90 US 461281**
**29.05.90 PCT/US90/02881**
**05.12.90 US 622395**

(43) Date of publication of application:
**31.07.91 Bulletin 91/31**

(84) Designated Contracting States:
**AT BE CH DE DK ES FR GB GR IT LI LU NL SE**

(71) Applicant: **ORSCHELN CO.**
**2000 Highway 63 South, Route 4**
**Moberly Missouri 65270(US)**

(72) Inventor: **Heimann, Robert L.**
**1345 Heritage**
**Moberly, Missouri 65270(US)**
Inventor: **Soucie, Mayne L.**
**3300 Oakside Court**
**Columbia, Missouri 65203(US)**
Inventor: **Webb, David R.**
**Route 1, Box 31**
**Excello, Missouri 65247(US)**

(74) Representative: **Liesegang, Roland, Dr.-Ing. et al**
**FORRESTER & BOEHMERT**
**Widenmayerstrasse 4 Postfach 22 01 37**
**W-8000 München 22(DE)**

(54) **Flexible corrosion-resistant conduit and method.**

(57) A flexible non-metallic, corrosion-resistant conduit (2) for a cable assembly which includes an extruded tubular synthetic plastic liner portion (4) having on is outer surface a plurality of circumferentially spaced helical strengthening ribs (8), and an extruded tubular synthetic plastic sleeve (10) portion extending concentrically about the liner portion. According to the method of the present invention, as the liner portion (4) is extruded via a first die, it is longitudinally pulled and rotatably twisted about its longitudinal axis to impart the desired helical configuration to the ribs (8). In one embodiment, the sleeve portion (10) is extruded by a second die concentrically about the liner (4), thereby to fill the spaces between the ribs (8), and in a second embodiment, the sleeve portion (20) is simultaneously formed by the first die integrally with the tips of the ribs (18), thereby to define helical passages (23) between the ribs. According to a third embodiment, an intermediate synthetic plastic layer (35) is extruded on the liner prior to the formation of the sleeve (40) and in a fourth embodiment, at least one reinforcing filament layer (59) is wound on the liner prior to the formation of the intermediate layer (55).

EP 0 438 745 A1

# FLEXIBLE CORROSION-RESISTANT CONDUIT AND METHOD

## Background of the Invention

### Field of the Invention

This invention relates to a cable assembly including a non-metallic corrosion-resistant outer conduit, and the method for producing the same, characterized by the provision of a tubular extruded synthetic plastic inner liner portion having external helical strengthening ribs, and a tubular extruded synthetic plastic protective outer sleeve portion arranged concentrically about the inner liner portion.

### Brief Description of the Prior Art

Corrosion-resistant conduits for control cable assemblies have been proposed including at least one synthetic plastic layer, as disclosed, for example, in the patents to Sullivan U.S. Patent No. 3,657,942, Fuduka U.S. Patent No. 4,112,708, Chatham U.S. Patent No. 3,435,634, and the Dehn German patent No. 3,021,533. In the Dehn German patent a synthetic plastic tubular liner having internal and external helical ribs is provided within a metal wire layer surrounded with a plastic casing thereby to reduce cable vibration. The spaces between the ribs are filed with a lubricant, thereby to improve the sliding characteristics of the inner force-transmitting member. In Chatham, a tubular synthetic plastic inner liner layer is provided having external helical ribs that extend in the grooves defined between a helically-wound, metal outer wire. In Fukuda, there is provided between the metal core member and the metal outer member a synthetic plastic liner member having helical inner and outer depressed portions for receiving lubricant. In Sullivan, the movable synthetic plastic inner force transmitting member includes external longitudinal ribs that engage the smooth cylindrical inner surface of the outer synthetic plastic conduit.

It is also broadly known in the art to extrude protective synthetic plastic outer cover layers on a cable conduit, as shown by the patents to Moore U.S. No. 4,099,425 and the Jiyunnosuke Japanese patent No. 59-121215.

## Summary of the Invention

The primary object of the present invention is to provide an improved corrosion-resistant non-metallic flexible outer conduit for a cable assembly, and method, characterized in that a tubular inner liner is extruded with external longitudinally extruded ribs, which liner is simultaneously longitudinally pulled and twisted about its longitudinal axis to cause the ribs to extend helically about the liner. By controlling the angle of the helical turns, the structural strength and flexibility characteristics of the cable may be controlled as desired.

According to the preferred embodiment of the invention, an outer sleeve of synthetic plastic material is extruded about the liner layer. According to a modification, an intermediate layer of synthetic plastic material is extruded about the liner prior to the formation of the outer sleeve. One or more layers of non-metallic reinforcing filaments may be wound upon the tips of the ribs prior to the formation of the intermediate layer.

According to a further embodiment of the invention, the liner member as initially extruded from its die means includes a concentric tubular outer layer integral with the tips of the ribs, whereby upon simultaneous longitudinal pulling and twisting of the liner about its longitudinal axis, helical noise-baffling passages are defined between the ribs, which construction reduces weight while distributing bending and compressive stresses over reduced cross-sections. Owing to the reduction in intraplanar stresses, higher strength polymers may be used without adversely affecting the flexibility of the conduit.

In accordance with a further object, a protective outer sleeve is connected with radially disposed helical ribs on the annular inner portion and extending longitudinally the length of the sleeve while rotating circumferentially, thereby redistributing tensile and compressive loading forces induced by bending of the conduit evenly over the radially spaced splines. This integral assembly eliminates the problems of movement and distortion inherent with conventional conduit while prohibiting the crushing effect of compressive forces inherent with reciprocating cable assemblies induced by operating sequences or installation, handling, shipping, and the like, while the extrusion of the exterior membrane offers protection from detrimental compounds found in the application environment.

## Brief Description of the Drawings

Other objects and advantages of the invention will become apparent from a study of the following specification, when viewed in the light of the accompanying drawing, in which:

Fig. 1 is a side elevational view, with certain parts broken away, of a first embodiment of the cable assembly of the present invention;

Fig. 2 is a sectional view taken along line 2-2 of Fig. 1;

Fig. 3 is a detailed side elevational view of the inner portion of the outer sleeve member of the apparatus of Fig. 1;

Fig. 4 is a sectional view taken along the line 4-4 of Fig. 3;

Fig. 5 is a schematic diagram illustrating the method for forming the conduit of Figs. 1 and 2;

Fig. 6 is a sectional view taken along line 6-6 of Fig. 5;

Fig. 7 illustrates diagrammatically the pulling and twisting apparatus of Fig. 5, and Figs. 8 and 9 illustrate diagrammatically the manner in which the upper and lower belts of the pulling and twisting apparatus may be varied to vary the angle of the helical ribs relative to the longitudinal axis of the liner;

Fig. 10 illustrates a second embodiment of the invention wherein the tubular outer sleeve has a cylindrical inner surface integral with the tips of the ribs;

Fig. 11 is a sectional view taken along line 11-11 of Fig. 10;

Fig. 12 is a schematic illustration of the method for extruding the embodiment of Fig. 10;

Fig. 13 is a sectional view of a third embodiment including an intermediate layer between the liner and the outer sleeve;

Fig. 14 is a diagrammatic illustration of the method for forming the embodiment of Fig. 13;

Fig. 15 is a sectional view of a fourth embodiment including reinforcing filaments wound helically upon the tips of, and extending in a direction opposite to, the helical ribs of the liner;

Fig. 16 is a diagrammatic illustration of the method for producing the conduit of Fig. 15;

Fig. 17 is a detailed schematic illustration of the filament winding means of Fig. 16; and

Figs. 18 and 19 are schematic illustrations of the manner in which the angles of the helical ribs and of the filaments relative to the longitudinal axis of the lever may be varied.

Detailed Description

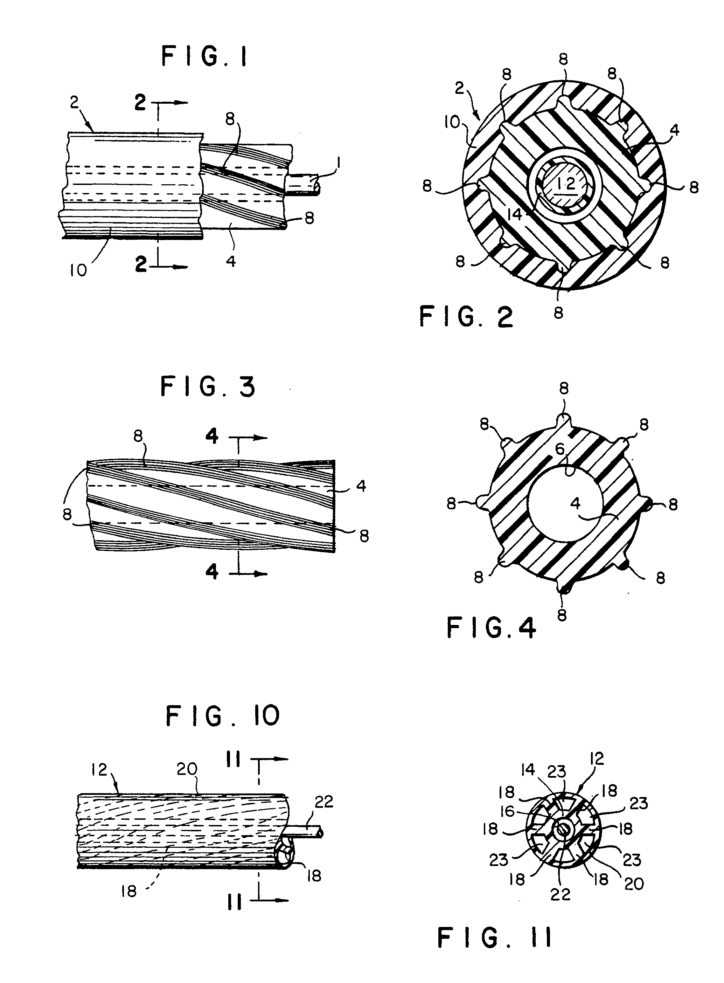

Referring first more particularly to Figs. 1-4, the cable assembly -- which is suitable for various mechanical control cable applications such as push-pull cables, throttle control cables or the like -- includes a flexible tubular outer sleeve or jacket member 2 having a continuous annular inner liner or core portion 4 containing a through bore having a smooth wall surface 6. As will be described in greater detail below, during the extrusion of the liner, it is simultaneously pulled longitudinally and twisted about its longitudinal axis to cause radially outwardly ribs 8 formed on the external circumference of the liner to have a helical configuration as shown in Figs. 1 and 3. The inner liner portion is formed of a flexible synthetic plastic material, such as NORYL GTX 910 produced by General Electric Company. Other suitable synthetic plastic materials that could be used for the liner include nylon, polypropylene, polyphenylene oxide, polyethylene, acetal, polybutylene terephthalate, and polyetheramide.

Formed by extrusion concentrically about the inner liner portion from a soft protective corrosion-resistant synthetic plastic material (preferably TPR, a thermoplastic rubber, or SANTOPRENE, produced by Monsanto or other suitable polymeric thermoplastic material) is a protective outer cable sleeve portion 10. In this embodiment, this protective outer sleeve portion completely fills the spaces between the helical ribs, as shown in Fig. 2. Other suitable materials for the sleeve include urethane, plasticized nylon, polypropylene, and polyethylene.

Arranged for longitudinal sliding movement within the bore of the flexible outer sleeve 2 is an inner force-transmitting metallic or non-metallic core member 12, such as a pultruded rod, a unitary rod-like member, or a stranded member formed from metal strands, as is known in the art. Preferably, the core member is coated with a layer 14 of self-lubricating material (such as nylon or a polyester) compatible with the material from which the annular inner portion 4 is formed.

It will be seen that the inner annular portion 4 and the helical ribs 8 impart strength to the outer sleeve member and that the outer annular portion 10 protectively covers the inner portion against corrosion, moisture, ice, mud, sand and other foreign materials.

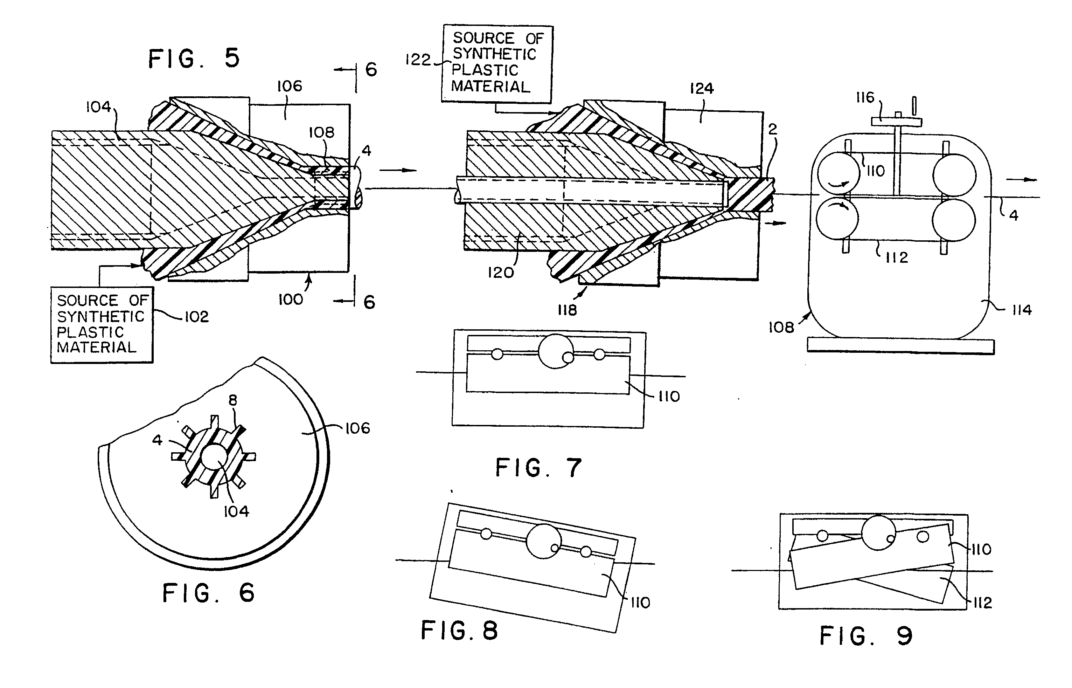

Referring now to Figs. 5-9, in producing the conduit of Figs. 1-4, the splined liner member 4 is formed by first extrusion liner die means 106 to which the plastic material is supplied from source 102. The plastic material flows between tip 104 and the splined liner die 106 to extrude via rib-forming chamber 107 a tubular product 4 having external longitudinally-extending splines 8, as shown in Fig. 6. The liner core is then supplied to pressure extrusion die means 118 including a pressure tip 120 that guides the liner while the coating sleeve material supplied by second source 122 is formed concentrically thereabout during passage through the pressure die 124. According to a characterizing feature of the invention, the covered liner core is simultaneously longitudinally pulled and rotationally twisted about its longitudinal axis by the pulling and twisting apparatus 108 having upper and lower endless drive belts 10 and 112 that are adjustable about vertical axes relative to the housing 114 by conventional belt adjusting means 116. Owing to the simultaneous pulling and twisting effect, the ribs on the product exiting the pulling and twisting means 108 have the helical configuration shown in Figs. 1 and 3. The resulting product is cooled and either cut to length or stored on conventional reel means.

A typical extrusion die 100 or pressure extrusion die 118 is the Genca Model B1, produced by Genca Company of Clearwater, Florida. One example of the pulling and twisting apparatus 108 is the Goodman Model S/N 4216 produced by G.F. Goodman & Son, Inc. The extrusion temperatures and pressures of the die means 106 and 124 vary in accordance with the particular resin being used. For the molding die 100 having an acetal source 102, the temperature range is on the order of 300° F. to 340° F. (149° C. to 171° C.), and for NORTL GTX 910, the temperature range is on the order of 620° F. to 650° F. (326° C. to 343° C.). The extrusion pressure is on the order of 2000 psi to 3000 psi. For the pressure extrusion die 118, the temperature ranges of the source 122 of synthetic plastic material is on the order of 380° F. to 400° F. (193° C. to 204° C.) for TPR materials, 380° F. to 450° F. (193° C. to 232° C) for polyester-based TPE materials, 320° F. to 380° F. (160° C. to 193° C.) for urethane, polypropylene and polyethylene.

If desired, the helically-ribbed twisted product 4 exiting the pulling and twisting means 108 may be cooled (by the provision of a water bath between the pulling and twisting device 108 and the pressure die means 118, for example) to about 55° F. to 150° F. (13° C. to 66° C.) The jacketing temperature is a function of the material being extruded. In general, it is at least 20° F. higher than the melt point (and up to 100° F. higher with a strongly crystalline material). A melt-fusion bonding effect takes place between the outer sleeve 10 and the liner 4, the liner and sleeve materials being chosen on the basis of chemical resistance and flexural characteristics, rather than on strength performance. Since the sleeve experiences higher flexural stress, it is preferable to form it from a lower flexural modulus material, such as TPR, TPE, urethane, plasticized nylon, polypropylene, or polyethylene.

As shown in Figs. 7-9, the helical angle of the ribs relative to the longitudinal axis of the cable may be adjusted by varying the drive angles of the upper and lower endless belts 110 and 112 relative to the longitudinal axis of the liner. Depending upon the selection, more or less pitch can be induced as the thermoplastic is exiting from the extruder die. This helical formation is set by the freezing of the plastic as it passes through the water bath. Different applications may require various pitches to meet the engineering demands for rigidity, columnar strength, or as a counter-balance for the second stage application of filament windings. Additional surface area for the bonding of the sleeve and liner can be induced by the profiles of the ribs, i.e., thinner cross sectional areas would allow more melting and physical bonding.

Several very desirable manufacturing bonuses are accrued through the use of a thermoplastic design including a substantial rise in thru-put rates and the economic aspects of a reusable resource. With the proposed manufacturing methods, the conduit is formed in a nearly continuous process where separate work stations are eliminated and many operations may be automated to develop the highest possible manufacturing rates. Thermoplastic use provides a means for the reuse of materials that would otherwise be considered scrap, since components that do not meet the required manufacturing specifications can be ground up into small pieces, fed into an extruder and expressed in the form of reground plastic. This plastic can then be added to the virgin material on a percentage basis (20-30% by weight on the average) and used to manufacture the same components.

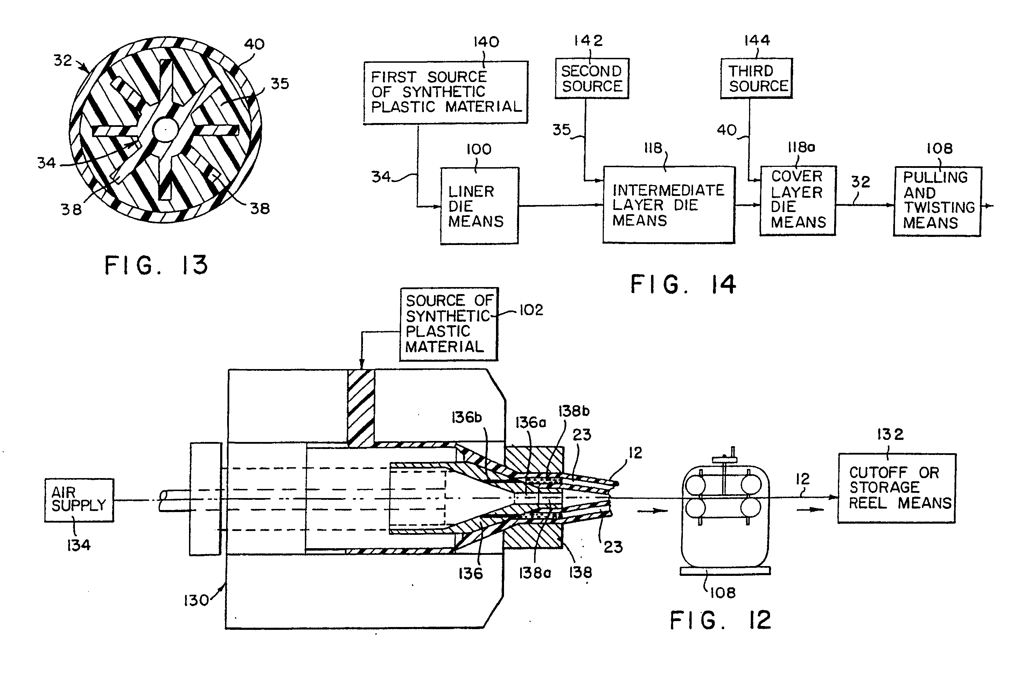

Referring now to Figs. 10-12, a second embodiment is disclosed in which the sleeve portion 20 is extruded simultaneously with the liner portion 14 by the use of the novel die means 138 of Fig. 12. In this embcdiment, the sleeve portion is tubular and is connected only with the tips of the radially outwardly extending longitudinal ribs 18, thereby defining through passage 23. When the liner is longitudinally pulled and rotationally twisted about its axis by the pulling and twisting device 108, the ribs 18 and passages 23 are given a helical configuration, whereupon the twisted product is cooled by bath means, not shown, and is fed to cut-off or storage reel means 132.

The die means 138 having a cross head cartridge 130 includes at one end a first input connected with a source of pressure air 134, and a laterally arranged second input that is connected with the source 102 of synthetic plastic material (i.e., one of the liner materials recited above in connection with the embodiment of Figs. 1-4). The tip member 136 of the die means 130 includes a central air passage 136a that communicates with the central bore 16 of the liner 12 via passage 138a die member 138, and circumferentially arranged passages 136b that supply air within the passages 23 via corresponding passages 138b in die member 138. A vacuum or atmospheric environment is provided where the product exits from die 138.

Thus, the product of Figs. 10 and 11 is a one-stage extrusion process that depends upon the interaction of the plastic, die and relative pressure differential to form the interstices within the plastic while vacuum/atmospheric forces work on the outside surfaces. Die manufacture and design are the crucial aspects of this application, with allowances being made for the inclusion of compressed air while maintaining the inner smooth bore and the outer shaped conduit structure controlled by the vacuum/atmospheric process.

Referring now to Figs. 13 and 14, a modification of the embodiment of Figs. 1 and 2 is disclosed wherein there is provided between the liner member 34 and the outer sleeve 40 an intermediate layer 35 of high flex modulus thermoplastic material, such as a base resin (such as one of the liner materials recited above) including a filler such as mineral fibers, glass fibers, aramid fibers, or carbon/graphite particles. The intermediate layer 35, which fills the spaces between the helical ribs 38, provides additional support and rigidity while maintaining the smooth inner configuration provided by the splined liner. The outer sleeve or jacket serves as a sound-deadening material, or for a specific function (such as U.V. protection, thermal barrier, chemical resistance or the like). Thus, it is possible to modify the outward profile of the high modulus material while maintaining similar processing temperatures of the externally radially ribbed structural core. In this embodiment the radial splines serve as boundaries for the high modulus material to provide planar surfaces along which shear forces introduced by bending can be distributed in the lower strength margins between the liner material selected for efficiency and the interstitial material selected for strength.

As shown in Fig. 14, the liner material 34 from source 140 is supplied to first die means 100 corresponding to those of Fig. 5, and the extruded ribbed product is supplied to a second pressure die 118 which supplies the high flex modulus intermediate layer material via second source 142. The pressure extrusion die 118 corresponds with the second die means of Fig. 5. The product covered by the intermediate layer then passes through a third die 118a that applies the outer sleeve material 40. The third die 118a corresponds with the die means 118 of Fig. 5, the tip 120 having been displaced to the left to increase the outside diameter of the extruded product. The resultant product is then longitudinally pulled and rotationally twisted about its longitudinal axis by the puller/twister 108, thereby forming the desired helically-ribbed configuration.

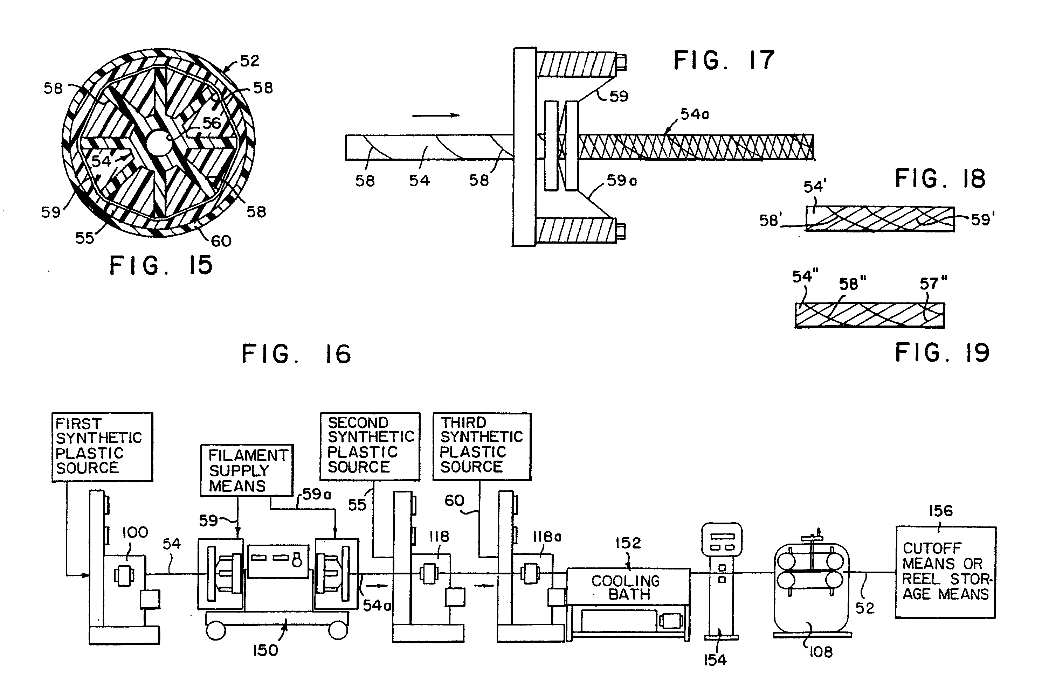

Referring now to Figs. 15-19, a fourth embodiment is disclosed in which a layer 59 of non-metallic reinforcing filaments is wound concentrically about the liner 54 in supported relation upon the tips of the helical ribs 58. Preferably, the filament layer 59 is wound in the opposite direction as that of the helical ribs. If desired, a second filament layer 59a may be wound upon the first layer by the winding apparatus 150 illustrated in Fig. 17. The high flex modulus material 55 is then extruded concentrically about the wound product exiting the winder 150 by second die means 118, which correspond with the second die means of Fig. 5. The intermediate layer is caused by pressure to fill the spaces between the interstices of the filament winding turns as well as the spaces between the helical ribs 58. Finally, the outer sleeve layer 60 is extruded concentrically about the intermediate layer by third die means 118a (which corresponds with the second die means of Fig. 5, with the tip member displaced to enlarge the outer diameter of the extrusion).

If desired, the resultant conduit may be fed through a cooling bath 152 having a temperature range of between 55°F and 150°F. (31°C to 83°C.) and then to a diameter monitoring device 154 (such as a Zumbach ODAC 19M coupled with a Zumbach SPCI). The resultant product is longitudinally pulled and twisted by the twister 108, whereupon the product is cut to length or stored on storage reel means 156.

Typically, the filament 59, 59a is E glass, S glass, boron, ceramic, graphite, aramid fiber, or polyetheramide. Fiber reinforcement is controlled by the exposure to extrusion process temperatures and pressures, that is the fiber chosen should not be affected physically by the extrusion process, thereby retaining the physical properties inherent in the material. There is an interplay of forces within the construction between the fiber reinforcing and the encapsulating resin support structure relative to the position of the fiber, expresses as a difference in stress distribution in a laminate plane with consideration of strength in a global format. Some bonding or wetting of the fiber by the encapsulating resin causes it to act as a better column support than the loose fiber or filament acting independently of the support resin. A comingled or prewetted fiber which is consolidated in the extrusion process is contemplated. Typical fiber types which are applicable include Celanese Cel-strand, or American Cyanamid polyetheramide covered aramid fibers. Powder coated fiber or other generic pultruded products of this construction may also be used. Key to this method is the resin matrix ratio of approximately 40-80 percent fiber/filament to resin appropriate adjustment being made to vary local stiffness, strength and flexibility.

According to the present invention, the various layers may be physically bonded together, if desired, depending on the elastomer combinations. When compatible resins are used between the outer sleeve and the liner (or the intermediate layer), bonding by fusion is produced which operates to attain a desired cable performance. When high wear or sealing resistance to chemical reaction are desired qualities of the cable, it is desired to bond the sleeve to the liner or intermediate layer.

While in accordance with the provisions of the Patent Statutes the preferred forms and embodiments of the invention have been disclosed, it will be apparent that other changes may be made without deviating from the inventive concepts set forth above.

## Claims

1. A cable assembly for mechanical control systems, comprising:

(a) a flexible tubular totally non-metallic corrosion-resistant outer conduit member, including:

(1) a tubular extruded synthetic plastic inner liner portion containing a longitudinal through bore and including on its external circumference a plurality of integral equally spaced radially outwardly extending strengthening ribs, said liner portion being twisted about its longitudinal axis to cause said ribs to extend helically about said inner liner portion; and

(2) a tubular extruded synthetic plastic protective outer sleeve portion arranged concentrically about said liner portion; and

(b) an inner force-transmitting member arranged for coaxial linear longitudinal displacement within the bore of said outer conduit member.

2. Apparatus as defined in claim 1, wherein said outer sleeve portion is contiguous with at least the tips of said helical ribs.

3. Apparatus as defined in claim 2, wherein the inner circumferential portion of said outer sleeve portion extends radially inwardly within and fills the spaces between said helical ribs, whereby said ribs are embedded in said outer sleeve portion.

4. Apparatus as defined in claim 2, wherein the inner circumference of said outer sleeve portion is generally cylindrical and integral with the tips of said helical ribs, thereby to define helical sound-deadening passages between said ribs.

5. Apparatus as defined in claim 1, wherein the inner circumference of said outer sleeve portion is cylindrical and concentrically spaced from the tips of said helical ribs, said outer conduit member further including:

(3) a tubular intermediate layer of synthetic plastic material arranged concentrically between said inner liner and outer sleeve portions, said intermediate layer filling the space between said inner liner and outer sleeve portions and extending radially inwardly within the spaces between said helical ribs.

6. Apparatus as defined in claim 5, and further including:

(4) a layer of reinforcement fibers wound helically concentrically about said inner liner member in a direction opposite the helical direction of said ribs, said reinforcement fiber layer being supported by the tips of said helical ribs and being embedded in said intermediate layer.

7. Apparatus as defined in claim 6, wherein said inner liner portion comprises a base resin selected from the group consisting of nylon, polypropylene, polyphenylene oxide, polyethylene, acetal, polybutylene terephthalate, and polyetheramide; wherein said intermediate layer includes said base resin and a filler selected from the groups consisting of mineral fibers, glass fibers, aramid fibers, and carbon/graphite particles; wherein said layer of reinforcement fibers is selected from the group consisting of aramid, E glass, S glass, boron, ceramic and polyetheramide; and wherein said outer sleeve is formed from a thermoplastic resin, Monsanto SANTOPRENE, a thermoplastic elastomer, urethane; plasticized nylon, polypropylene, polyphenylene oxide, and polyethylene.

8. The method of forming a totally non-metallic corrosion-resistant outer conduit for a cable system, comprising the steps of

(a) extruding via a first die a tubular synthetic plastic liner portion of continuous length having on its outer periphery a plurality of circumferentially spaced longitudinally-extending ribs; and

(b) simultaneously longitudinally pulling and rotationally twisting said extruded liner portion about its longitudinal axis, thereby to impart to said ribs a helical configuration relative to the longitudinal axis of said liner portion.

9. The method as defined in claim 8, wherein said tubular liner portion extruded by said first die includes an integral tubular sleeve portion arranged concentrically about, and in contiguous integral engagement with, the tips of said ribs, thereby to define helical passageways between said ribs.

10. The method as recited in claim 8, and further including the step of:

(c) extruding, prior to the pulling and twisting step, via a second die a tubular synthetic plastic outer sleeve concentrically about said liner portion.

11. The method as defined in claim 10, wherein the inner circumferential portion of said outer sleeve fills the spaces between said ribs, said ribs being embedded within said sleeve.

12. The method as defined in claim 8, and further including the steps of:

(c) extruding via a second die concentrically about said liner portion a tubular intermediate layer formed of a synthetic plastic base resin; and

(d) extruding via a third die concentrically about said intermediate layer a tubular synthetic plastic outer sleeve, the inner circumferential portion of said intermediate layer extending within the spaces between said ribs, said pulling and twisting step following said third die extrusion step.

13. The method as defined in claim 8, and further including the steps of:

(c) winding helical non-metallic reinforcing filaments circumferentially about said liner portion in supported engagement by said ribs;

(d) extruding via a second die concentrically about said liner layer an intermediate layer formed of a synthetic plastic material, said intermediate layer extending radially inwardly through the spaces between said filaments and into the spaces between said ribs; and

(e) extruding via a third die concentrically about said intermediate layer a tubular synthetic plastic outer sleeve, said pulling and twisting step following said third die extrusion step.

14. The method as defined in claim 13, wherein said reinforcing filaments are wound in the opposite helical direction than the helical direction of turn of said ribs.

15. The method as defined in claim 13, wherein the inner liner comprises a base resin selected from the group consisting of nylon, polypropylene, polyphenylene oxide, polyethylene, acetol, polybutyleneterephthalate, and polyetheramide; wherein said intermediate layer includes a base resin and a filler selected from the group consisting of mineral fibers, glass fibers, aramid fibers, and carbon/graphite particles; wherein said layer of reinforcement fibers is selected from the group consisting of aramid, E glass, S glass, boron, ceramic and polyetheramide; and wherein said outer sleeve is formed from a thermoplastic resin, Monsanto SANTOPRENE, a thermoplastic elastomer, urethane, plasticized nylon, polypropylene, polyphenylene oxide, and polyethylene.

16. The method as defined in claim 8, and further including the step of varying the angle of helical turn of said ribs relative to the longitudinal axis of said liner, thereby to vary the strength and flexibility characteristics of said liner.

FIG. 1

FIG. 2

FIG. 3

FIG.4

FIG. 10

FIG. 11

FIG. 5

124

2

SOURCE OF
SYNTHETIC
PLASTIC
MATERIAL

122

118

120

4

116

110

112

108

114

FIG. 9

110

112

106

108

106

104

102

SOURCE OF
SYNTHETIC
PLASTIC
MATERIAL

100

6

6

4

110

FIG. 7

110

FIG. 8

8

104

4

106

FIG. 6

FIG. 13

**FIG. 14**

140 FIRST SOURCE OF SYNTHETIC PLASTIC MATERIAL

142 SECOND SOURCE

144 THIRD SOURCE

34

35

40

100 LINER DIE MEANS

118 INTERMEDIATE LAYER DIE MEANS

118a COVER LAYER DIE MEANS

32

108 PULLING AND TWISTING MEANS

102 SOURCE OF SYNTHETIC PLASTIC MATERIAL

136b  136a  138b  23  12

AIR SUPPLY

134

130

136  138a  138  23

108

12

132 CUTOFF OR STORAGE REEL MEANS

**FIG. 12**

10

FIG. 15

58  52  58

56

54

59  55  60

FIG. 15

FIG. 17

59

54a

58  54  58

59a

FIG. 18

54'

58'  59'

54"  58"  57"

FIG. 19

FIG. 16

FIRST SYNTHETIC PLASTIC SOURCE

FILAMENT SUPPLY MEANS

SECOND SYNTHETIC PLASTIC SOURCE

THIRD SYNTHETIC PLASTIC SOURCE

59a

55

60

100

54

59

118

118a

152

156

54a

COOLING BATH

CUTOFF MEANS OR REEL STOR-AGE MEANS

150

154

108

52

EP 0 438 745 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-2 352 350 (YAZAKI CORP.)<br>* Page 3, line 33 - page 4, line 22; figures 3,4 * | 1,5-7 | F<br>16 C 1/26<br>B 29 C 53/14<br>B 29 C 47/06 |
| A | FR-A-2 342 837 (ORFINO et al.)<br>* Claim 1; figures * | 1-3 | |
| A | US-A-4 296 060 (KILLMEYER et al.)<br>* Figures; column 3, line 55 - column 4, line 21 * | 8 | |
| A | US-A-4 205 899 (KING et al.)<br>* Abstract; figures 1,2 * | 8 | |
| A | US-A-3 441 637 (DAVIS)<br>* Column 3, lines 1-16; claim 1; figures 1-4 * | 8 | |
| A | US-A-3 872 893 (ROBERTS) | | |
| A | GB-A-2 181 090 (TELEPHONE CABLES LTD) | | |

TECHNICAL FIELDS SEARCHED (Int. Cl.5)

F 16 C
B
29 C

The present search report has been drawn up for all claims

| Place of search | Date of completion of search | Examiner |
|---|---|---|
| The Hague | 11 April 91 | GUTHMULLER J.A.H. |